# EUROPEAN PATENT SPECIFICATION

(11) **EP 1 589 596 B1**
(45) Date of publication and mention of the grant of the patent: **28.05.2008**
(21) Application number: 04105714.2
(22) Date of filing: 11.11.2004
(51) Int. Cl.: H01M 2/04, H01M 2/12

(54) **Cover for accumulator containers.**
Decksel für Akkumulatorbehälter
Couvercle pour un bac d'accumulateur

(30) Priority: 21.04.2004 IT VI20040092
(43) Date of publication of application: 26.10.2005
(73) Proprietor: Biasin SRL, 36045 Madonna di Lonigo (VI) (IT)
(72) Inventor: BIASIN, Renato, 36050, MONTORSO VICENTINO (VI) (IT)
(74) Representative: Bonini, Ercole

(56) References cited:
- EP-A- 0 503 264
- WO-A-00/57502
- WO-A-99/48161
- US-A- 5 278 003
- US-A- 5 702 841
- US-A1- 2002 012 835
- US-A1- 2002 031 699
- US-B1- 6 277 517
- US-E1- R E37 901

## Description

The invention is about a cover for accumulator containers of the starter type, usually installed on motor vehicles.

It is known that, in the accumulators manufacture, proper containers are used, made of materials like, for example, synthetic resins based on polyvinyl chloride, polypropylene, celluloid, able to resist the action of an acid or a base, commonly called electrolyte, placed inside the container.

A plurality of electrodes, consisting of metal plates, is disposed inside the container and it is connected to the positive pole and the negative pole of a current generator.

The container is closed at its upper opening by means of a cover that, in plan view, generally has a rectangular shape.

This cover is provided with a plurality of through holes, through which the electrolyte is introduced during the so called accumulator formation phase or during said accumulator recharge operation.

The cover consists in practice of a main body, shaped according to the constructional and aesthetical requests of the customers.

In fact, the need to customize the cover of the containers used in the accumulators manufacture is more and more spread.

The customers, to gain a competitive advantage towards the competitors in a technical field which has become overstocked in the last years, require the manufacturers to provide for covers which are as different as possible from the others at the point of sale or, for example, when they are offered to the main car manufacturers.

Therefore, the main inconvenience related to the manufacture of this component for accumulator containers is due to the fact that the manufacturers are obliged to carry out as many covers as the different requests of this sector's market are.

This involves the need to prepare proper manufacturing moulds for each single article, with the obvious disadvantages this means in terms of productive costs. Besides that, another inconvenience is due to the fact that, to meet the different customers demands, the manufacturer has to set up at any time a new and complete production, with the consequence that the manufacturing and delivering times of the cover are inevitably prolonged.

Not the least inconvenience is due to the fact that, if the manufacturer decides to maintain in stock even small quantities of different covers, he must manage a rather high number of codes, certainly greater than that generated by more standardized productions.

The present invention intends to overcome the aforementioned inconveniences.

In particular, the main object of the invention is to provide for a cover for accumulator containers which allows a higher productive standardization, although supplying differentiated products to the market, able to meet the different customers needs.

It is another object of the invention to reduce the costs related to the availability of moulds suitable for manufacturing any type of cover for accumulator containers.

It is a further object of the invention to reduce the manufacturing and delivering times of cover for accumulator containers, in order to satisfy in a quicker way the customers needs relative to the times allowed by the prior art.

Said objects are obtained by a cover for containers suitable for being used in the accumulators manufacture according to the main claim.

Advantageously, the invention allows the manufacturer to meet the different customers needs in a quicker way with respect to the prior art.

More advantageously, the invention allows the manufacturers to customize the cover shape and colour according to the customers needs, without requiring to bear economic investments for manufacturing moulds dedicated for each execution.

Still advantageously, the invention provides for covers having rather appealing aesthetical features.

Furthermore advantageously, with the invention, the costs related to the manufacture of covers for accumulator containers are reduced with respect to the prior art.

In fact, each manufacturing mould is composed by a first mould, of more articulate design, common to the manufacture of each model, and a second less complicated mould, which is modified according to the customers requests and tastes.

Said objects and advantages, and others better specified in the following description, will be better highlighted in the description of preferred executive embodiments of the invention given in an explanatory way, with reference to the figures of the annexed drawings, wherein:
- Figure 1 is an axonometric view of the cover of the invention, applied to an accumulator container;
- Figure 2 is an axonometric view of the cover of Figure 1;
- Figure 3 is an upside down axonometric view of the cover of Figure 2;
- Figure 4 is an axonometric view of a detail of Figure 2;
- Figure 5 is an axonometric view of a further detail of Figure 2;
- Figure 6 is an axonometric view of a different executive embodiment of Figure 2;
- Figure 7 is an upside down axonometric view of the cover of Figure 6;
- Figure 8 is an axonometric view of a detail of Figure 6;
- Figure 9 is an axonometric view of a further detail of Figure 6;
- Figure 10 is an axonometric view of a another executive embodiment of Figure 2;
- Figure 11 is an axonometric view of a detail of Figure 10;
- Figure 12 is an upside down axonometric view of the detail of Figure 11; and
- Figure 13 is an axonometric view of another detail of Figure 10.

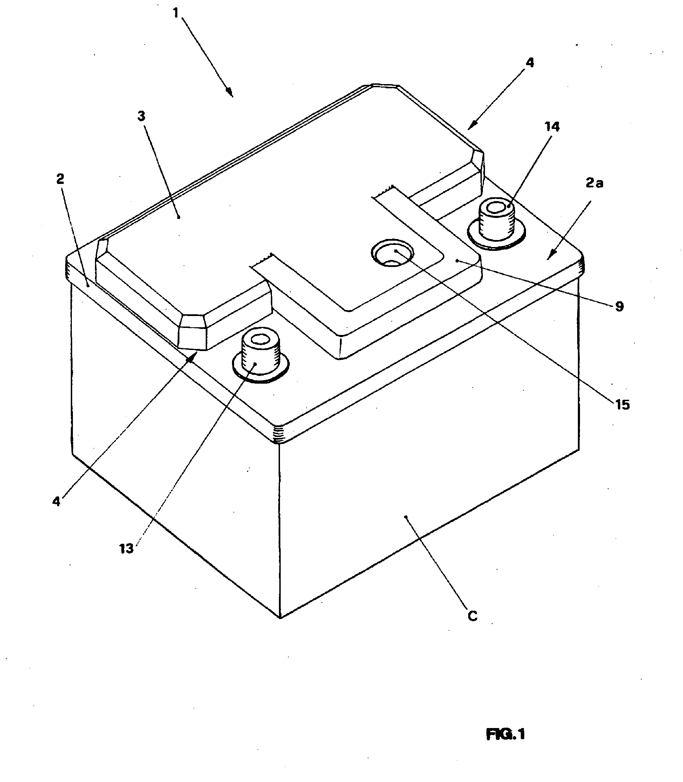

The cover of the invention is shown in Figure 1, where it is generally indicated with numeral **1**, applied to a container **C** used for carrying out accumulators installed, for instance, on motor vehicles.

One can see that the cover **1** comprises a main body **2** for closing the container **C,** provided with a plurality of not visible first through holes for supplying the electrolyte, being it an acid or a base, inside the container **C.**

A shaped cap **3** is formed at the first through holes, being raised from the upper wall **2a** of the main body **2.**

According to the invention, the main body **2** and the shaped cap **3** are two separated pieces connected through joining means, generally indicated with numeral **4**.

Moreover, on the main body **2** the positive and negative poles, generally indicated with numerals **13** and **14**, are formed, used to perform the common operations of accumulator charge and car electrical equipment connection.

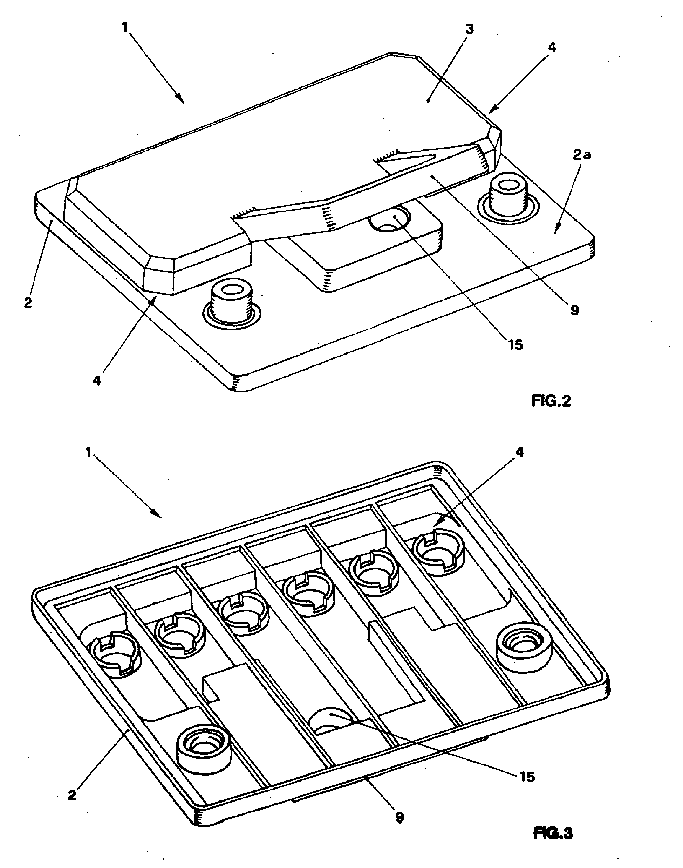

Figures 1, 2 and 3 show that the shaped cap **3** and the main body **2** comprise a common through hole **15** which, according to what is well known in this technical field, is used for positioning a feeler used to check the charge condition of the accumulator.

The cover **1** also comprises a handle **9**, grasping which the user easily transports the container **C**.

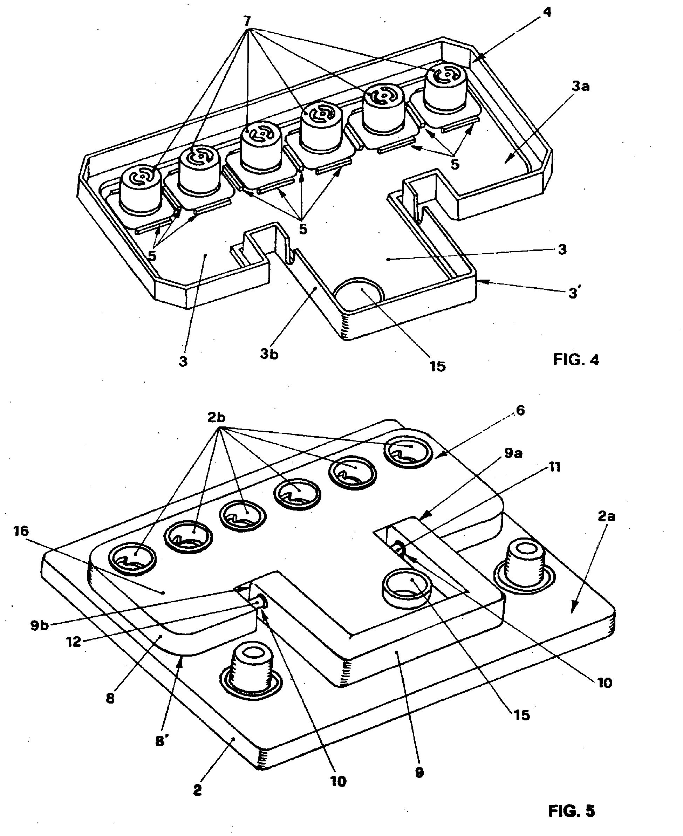

As evidenced in Figures 4 and 5, the joining means **4** comprise profiles, generally indicated with numeral **5,** joined to the shaped cap **3,** and opposite profiles, generally indicated withy numeral **6,** joined to the main body **2,** which are mutually snap coupled by pressure.

More particularly, Figure 4 shows that the profiles **5** consist of a plurality of caps **7** disposed on the lower wall **3a** of the shaped cap **3.**

Preferably, the caps **7** form a single body with the shaped cap **3,** since they are both obtained with a injection moulding process of plastic materials, but it is evident that, in other executive embodiments, they could be coupled with the shaped cap through proper connection means.

The opposite profiles **6** consist instead of the aforementioned first through holes, generally indicated with numeral **2b** in Figure 5, through which the electrolyte supply inside the container **C** takes place.

Therefore, the caps **7** are inserted in the through holes **2b** to form the joining means **4** as a whole, when the shaped cap **3** is coupled with the main body **2.**

According to the preferred executive embodiment hereby described, the shaped cap **3** has a substantially **T** shaped plan outline **3',** as shown in detail in Figures 1, 2 and 4.

Said cap is provided with a peripheral edge **3b,** to be externally coupled with the perimeter of a raised edge **8,** well visible in Figure 5, and having a substantially **T** shaped plan outline **8'** too, which is raised from the upper wall **2a** of the main body **2**.

The first through holes **2b** are obtained just at the plane **16** delimited by the raised edge **8** of the main body **2**.

Still in Figure 5 it is shown that the handle **9** is coupled with the main body **2** through joining means, generally indicated with numeral **10,** preferably but not necessarily consisting of a through hole, not visible in the annexed drawings, obtained in each of the free ends **9a, 9b** of the handle **9**, in which a pin **11, 12** protruding from the raised edge **8** of the main body **2** is inserted.

It is to be understood that, in other executive embodiments of the invention, the handle could be coupled with the main body through different fasteners but of known type per se.

In further embodiments of the invention, said handle could be coupled with the shaped cap instead of the main body to which said cap is then fixed.

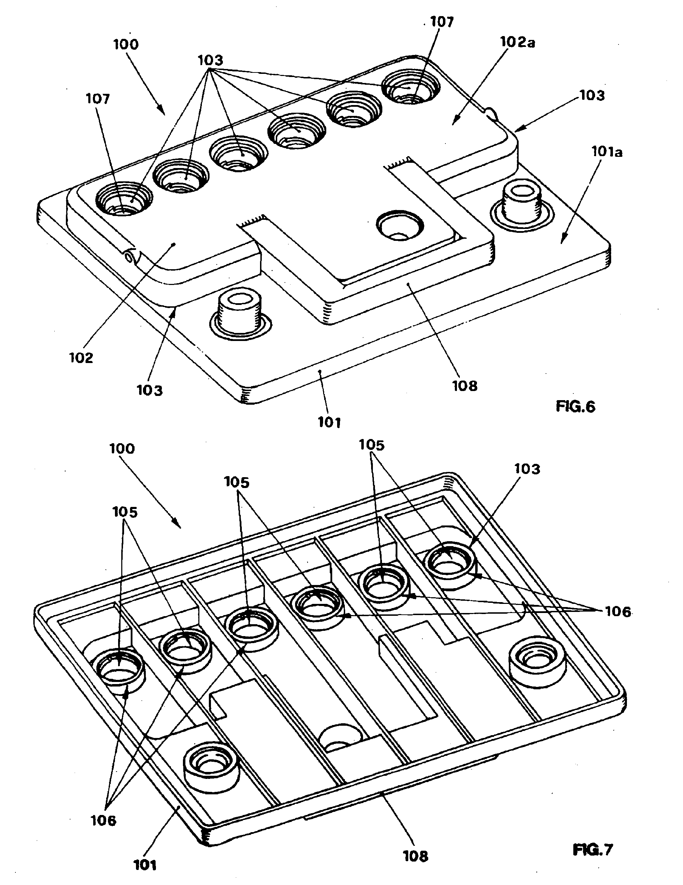

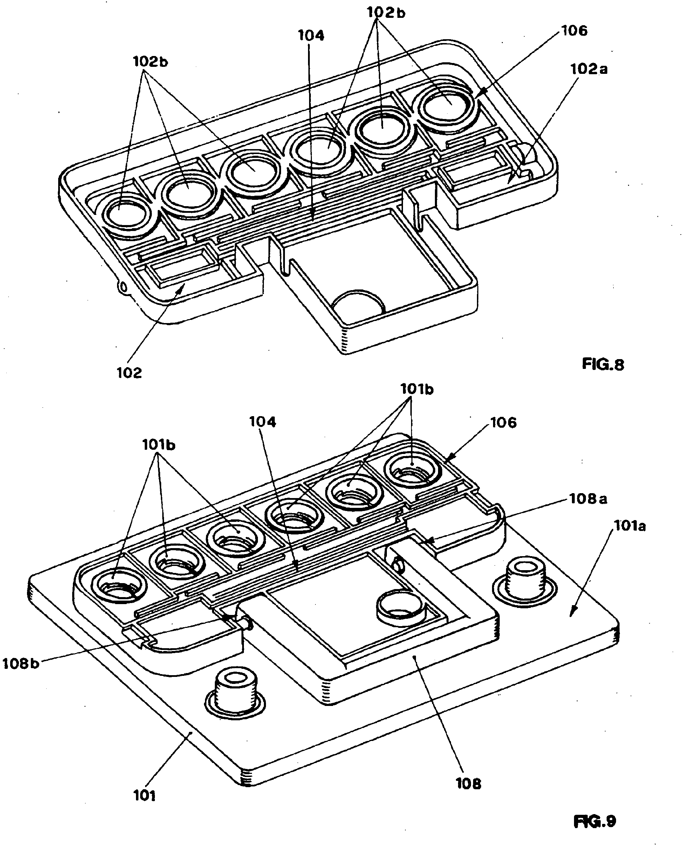

Another executive embodiment of the cover of the invention, generally indicated with numeral **100**, is shown in Figure 6, which is different from that previously described with reference to Figures 1 to 5 in that the joining means, generally indicated with numeral **103,** comprise in this case a welding layer, not visible in the drawings, made at walls, generally indicated with numeral **104** and visible in Figures 8 and 9 only, projecting from the lower wall **102a** of the shaped cap **102** and from the upper wall **101a** of the main body **101.**

It is evident that, in other executive embodiments of the invention, the welding layer which provides for the joining means could be made at the lower edge of the shaped cap and at the upper edge of the main body.

According to further executive embodiments of the invention, the joining means could comprise an adhesive layer made at the lower edge of the shaped cap and at the upper edge of the main body.

Preferably but not necessarily, the joining means also **103** comprise profiles, generally indicated with numeral **105,** joined to the shaped cap **102,** and opposite profiles, generally indicated with numeral **106,** joined to the main body **101**.

Just the profiles **105** and the opposite profiles **106** define another substantial difference in the cover **100** with respect to the cover **1**.

In fact, the profiles **105** still consist of a plurality of caps, generally indicated with numeral **107** in Figure 6, but they are coupled with the upper wall **102a** of the shaped cap **102** and thus they are externally visible.

The caps **107** are inserted in the opposite profiles **106**, which now consist not only of first through holes, generally indicated with numeral **101b,** obtained in the main body **101,** but also of a plurality of second through holes, generally indicated with numeral **102b**, obtained in the shaped cap **102**.

The second through holes **102b** define a longitudinal axis which substantially coincides with the longitudinal axis defined by the first through holes **101b.**

Therefore, the cover **100** of Figure 6 allows the user to top up with water the accumulator when the common maintenance operations have to be performed. On the other hand, the aesthetical effect provided by the cover of Figure 1 is better, since it is lacking elements, like said caps, which interrupt the continuity of the visible surface and which have a merely technical purpose.

It should be intended that, in further executive embodiments of the invention, in which the shaped cap is still coupled with the main body through a welding layer, the caps could be disposed again on the lower wall of the shaped cap, providing for a combination of the embodiment of Figure 1 with that of Figure 6. According to the preferred executive embodiment hereby described, the welding layer consist of a heat seal but, in other embodiments, it could consist of different but of known per se welding methods, for instance by ultrasounds.

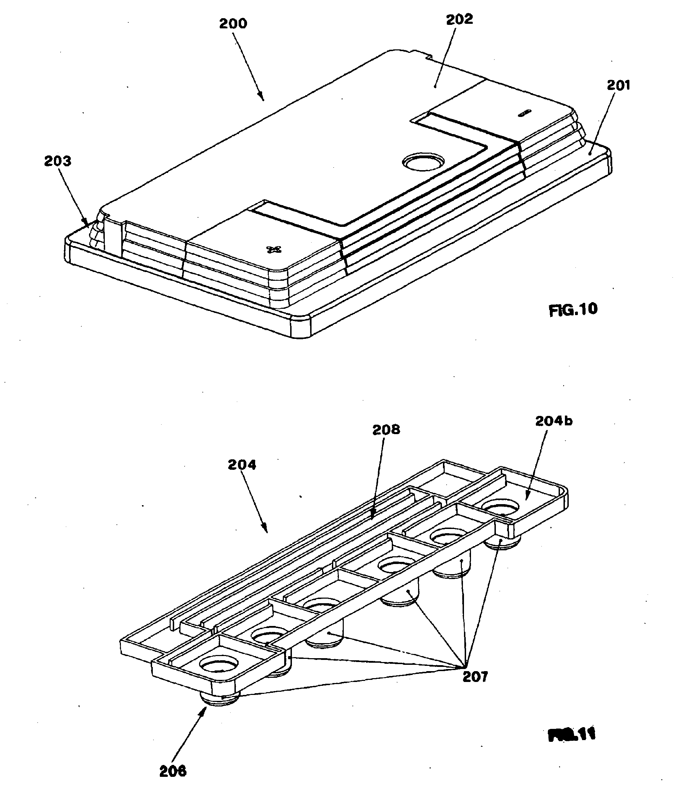

Another executive embodiment of the cover, generally indicated with numeral **200**, is shown in Figure 10, which is primarily different from those previously described for the particular shape of the shaped cap **202** supported by the main body **201**, which is instead of the same shape.

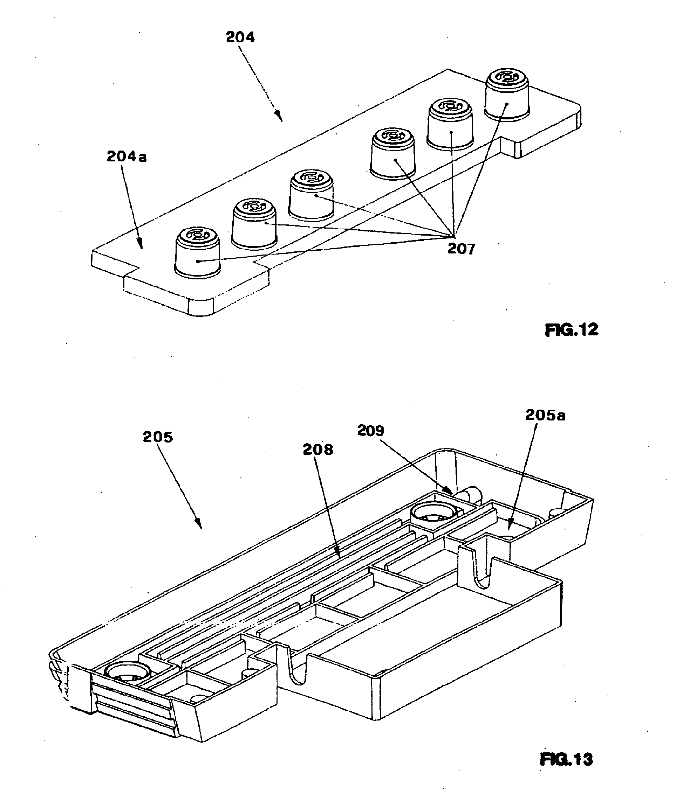

Furthermore, in this case, the shaped cap **202** is composed by a first element **204,** shown in the two views of Figures 11 and 12, which is disposed close to said main body **201**, and by a second element **205**, shown in Figure 13, which is disposed to cover said first element **204**.

One can see that the profiles **206**, consisting of the caps **207**, are disposed on the lower surface **204a** of the first element **204,** and thus they will be snap coupled with opposite profiles, not shown in the drawings, obtained in the main body **201**.

The joining means, generally indicated with numeral **203** and consisting of the usual welding layer, will be provided on the projecting walls **208** obtained on the upper surface **204b** of the first element **204** and on the corresponding projecting walls **208** obtained on the lower surface **205a** of the second element **205**.

This constructional embodiment provides for a particularly high structural stability level of the shaped cap.

The projecting walls **208** of the first element **204** and the second element **205** form the labyrinth along which the gases generated by the electrochemical processes which take place in each electrolytic cell during the accumulator charge are canalized, before being discharged to the outside through an outlet mouth **209** obtained on the second element **205**.

As it is known, due to upsettings, rotations and overturnings of the accumulator, for example during its handling, part of the electrolytic liquid exits from the cells through the through holes of the main body **201.**

If the liquid discharged from the cells reaches the outlet mouth **209,** the efficiency condition of the accumulator could be at least partially compromised. The function of the labyrinth is thus to prolong the path of the electrolyte outgoing from the cells, preventing it to reach the outlet mouth **209.**

This basic aspect, required by the market standards and by the rules on the matter, is connected to another undoubtedly important advantage achieved by the labyrinth of the cover **200** with respect to the embodiments described so far, in particular that of Figures 8 and 9.

In fact, in the latter executive embodiment, the coupling between the main body **101** and the shaped cap **102** takes place by welding or by gluing, generally performed at the corresponding projecting walls **104,** after that the accumulator charge phase is finished.

However, as previously mentioned, since the electrolyte exits from the through holes **101 b** during the charge phase, before performing the welding process it is necessary to perfectly clean the upper surface of the main body **101** and to wait that said surface is well dry, otherwise it is impossible to carry out the operation or to perform it in a correct way.

On the contrary, with the embodiment of Figure 10 and the subsequent ones, the cleaning of the upper surface of the main body **201** after the electrolyte topping up is no more needed, since said body and the shaped cap **202** are pressure-coupled.

Here, the projecting walls **208** are disposed in the first element **204** and in the second element **205,** so that the gas discharging labyrinth is located inside the shaped cap **202** and no more between said cap and the main body, as it happens instead in the cover **100**.

The labyrinth communicates with the interior of the accumulator by means of the through holes obtained on the main body **201.**

The welding or the gluing is performed on the projecting walls **208** of the first **204** and the second element **205,** which are both integrally made of plastic material, and thus the shaped cap **202** is obtained.

Said cap is then coupled with the main body **201** without performing any welding operation, that is by snap coupling the profiles **206** inside the opposite profiles present in the main body **201**.

Therefore, the above described tricks or cleaning treatment of the upper surface of the main body **201** are no more needed.

In conclusion, the embodiment of Figure 10 has the considerable advantage of simplifying the application of the cover **200** to the container, allowing the manufacturers, especially the accumulator factories, to reduce the accumulator manufacturing costs and times.

Operatively, the manufacturer disposes the main body **2, 101** to close the container **C** and applies the handle **9, 108** thereto, by the insertion of the pins, of the type indicated with numerals **11, 12** in Figure 5, inside the through holes obtained at the ends **9a**, **9b** and **108a**, **108b** of the corresponding handles **9**, **108**.

Subsequently, the manufacturer externally couples the shaped cap **3, 102** with the main body **2, 101,** thus completing the preparation of the cover **1, 100.**

On the contrary, the embodiment of Figure 10 is different because it is required at first to couple, by welding the corresponding projecting walls **208,** the second element **205** with the first element **204** and thus to snap couple the first element **204** with the main body **201**.

Therefore, by the invention, the manufacturer could carry out the shaped cap with the specific shape and colour required by the customer, while the underlying main body is produced in a standardized manner.

He is thus able to customize the cover models, at the same time maintaining as uniform as possible the production, in particular of that component, more complex to manufacture, that is the main body, which is disposed to close the container.

So, he should merely modify the shaped cap mould, easier to manufacture, being able to meet each single customer's need anyhow.

Consequently, the manufacturer reduces the costs related to the production of this kind of components, as well as the articles delivering lead time, in order to satisfy in a quicker way the needs of all the customers.

On the basis of the aforesaid description, it should be understood that the cover of the invention achieves all the aforementioned objects and advantages.

Modifications to the cover of the invention could be introduced in the executive stage, consisting for instance in a different shape of the shaped cap with respect to those described and shown in the present description.

Besides that, different executive embodiments of the invention could be introduced, in which the joining means are of different kind with respect to that previously described and shown, without impairing the advantage provided by the present patent.

All the described and cited, but not shown in the figures of the annexed drawings, embodiments, if they fall within the scope of protection of the following claims, should be intended as protected by the present patent.

## Claims

1. A cover (1; 100; 200) for containers (C) able to be used in the accumulators manufacture, comprising a main body (2; 101; 201) for closing said container (C), provided with a plurality of first through holes (2b; 101b) for supplying the electrolyte, at which a shaped cap (3; 102; 202) raised from the upper wall (2a; 101a) of said main body (2; 101; 201) is formed, said main body (2; 101; 201) and said shaped cap (3; 102; 202) being two separated pieces connected through joining means (4; 103; 203) **characterized in that** said shaped cap (202) is composed by a first element (204), disposed close to said main body (209), and by a second element (205), disposed to cover said first element (204).

2. The cover (1; 100) according to claim 1) **characterized in that** said joining means (4; 103) comprise profiles (5; 105), joined to said shaped cap (3; 102), and opposite profiles (6; 106), joined to said main body (2; 101), which are mutually snap coupled by pressure.

3. The cover (100) according to claim 1) **characterized in that** said joining means (103) comprise a welding layer, made at walls (104) projecting from said upper wall (101a) of said main body (101) and from the lower wall (102a) of said shaped cap (102).

4. The cover according to claim 1) **characterized in that** said joining means comprise a welding layer made at the lower edge of said shaped cap and at the upper edge of said main body.

5. The cover according to claim 1) **characterized in that** said joining means comprise an adhesive layer made at the lower edge of said shaped cap and at the upper edge of said main body.

6. The cover (200) according to claim 1) **characterized in that** said joining means (203) comprise a welding layer, provided at walls (208) projecting from the upper surface (204b) of said first element (204) of said shaped cap (202) and from the lower surface (205a) of said second element (205) of said shaped cap (202).

7. The cover (1) according to claim 2) **characterized in that** said profiles (5) consist of a plurality of caps (7), disposed on the lower wall (3a) of said shaped cap (3).

8. The cover (100) according to claim 2) **characterized in that** said profiles (105) consist of a plurality of caps (107) which are externally coupled with the upper wall (102a) of said shaped cap (102).

9. The cover (200) according to claim 1) **characterized in that** said profiles (206) consist of a plurality of caps (207) disposed on the lower surface (204a) of said first element (204) of said shaped cap (202).

10. The cover (1) according to claim 7) **characterized in that** said opposite profiles (6) consist of said first through holes (2b), inside which said caps (7) are inserted.

11. The cover (100) according to claim 8) **characterized in that** said opposite profiles (106) consist of said first through holes (101b) and of a plurality of second through holes (102b), obtained in said shaped cap (102), which define a longitudinal axis which substantially coincides with the longitudinal axis defined by said first through holes (101b) obtained in said main body (101), said caps (107) being inserted in said first (101b) and said second (102b) through holes.

12. The cover (100; 200) according to claim 3) or 4) **characterized in that** said welding layer consist of a heat seal.

13. The cover (1; 100; 200) according to claim 1) **characterized in that** said shaped cap (3; 102; 202) has a substantially T shaped plan outline (3').

14. The cover (1; 100; 200) according to claim 1) **characterized in that** said shaped cap (3; 102; 202) is provided with a peripheral edge (3b) which is externally coupled with the perimeter of a raised edge (8) which is raised from said upper wall (2a; 101a) of said main body (2: 101; 201).

15. The cover (1; 100; 200) according to claim 14) **characterized in that** said raised edge (8) has a substantially T shaped plan outline (8').

16. The cover (1; 100; 200) according to claim 14) **characterized in that** said first through holes (2b; 101b) are obtained in said raised edge (8).

17. The cover (1: 100; 200) according to claim 14) **characterized in that** it comprises a handle (9; 108) coupled with said main body (2; 101; 201) through joining means (10).

18. The cover according to claim 1) **characterized in that** it comprises a handle coupled with said main body through fastening means.

19. The cover (1; 100; 200) according to claim 17) **characterized in that** said joining means (10) consist of a pin (11, 12) protruding from said raised edge (8), inserted in a through hole obtained in each of the free ends (9a, 9b; 108a, 108b) of said handle (9; 108).

20. The cover (200) according to claim 6) **characterized in that** said projecting walls (208) of said first element (204) and of said second element (205) form a labyrinth along which the gases generated by the electrochemical processes which take place in each electrolytic cell during the accumulator charge are canalized, before being discharged to the outside through an outlet mouth (209) obtained on said second element (205).

## Patentansprüche

1. Deckel (1; 100; 200) für Behälter (C), der bei der Herstellung von Akkumulatoren verwendbar ist, umfassend einen Hauptkörper (2; 101; 201) zum Verschließen des Behälters (C), der mit einer Vielzahl an ersten Durchgangslöchern (2b; 101b) zum Zuführen des Elektrolyten versehen ist und an dem eine Formkappe (3; 102; 202), die zur oberseitigen Wand (2a; 101 a) des Hauptkörpers (2; 101; 201) erhaben ist, ausgebildet ist, wobei der Hauptkörper (2; 101; 201) und die Formkappe (3; 102; 202) zwei separate Teile sind, die über Verbindungsmittel (4; 103; 203) verbunden sind, **dadurch gekennzeichnet, dass** die Formkappe (202) aus einem ersten Element (204), das nahe zum Hauptkörper (201) angeordnet ist, und einem zweiten Element (205), das angeordnet ist, um das erste Element (204) abzudecken, aufgebaut ist.

2. Deckel (1; 100) nach Anspruch 1), **dadurch gekennzeichnet, dass** die Verbindungsmittel (4; 103) Profile (5; 105), die mit der Formkappe (3; 102) verbunden sind, und Gegenprofile (6; 106), die mit dem Hauptkörper (2; 101) verbunden sind, umfassen, die durch Druck eine Schnappverbindung miteinander eingehen.

3. Deckel (100) nach Anspruch 1), **dadurch gekennzeichnet, dass** die Verbindungsmittel (103) eine Schweißschicht umfassen, die an Wänden (104) ausgebildet ist, die von der oberseitigen Wand (101 a) des Hauptkörpers (101) und von der unterseitigen Wand (1 02a) der Formkappe (102) vorstehen.

4. Deckel nach Anspruch 1), **dadurch gekennzeichnet, dass** die Verbindungsmittel eine Schweißschicht umfassen, die an der unteren Kante der Formkappe und der oberen Kante des Hauptkörpers ausgebildet ist.

5. Deckel nach Anspruch 1), **dadurch gekennzeichnet, dass** die Verbindungsmittel eine Klebeschicht umfassen, die an der unteren Kante der Formkappe und der oberen Kante des Hauptkörpers ausgebildet ist.

6. Deckel (200) nach Anspruch 1), **dadurch gekennzeichnet, dass** die Verbindungsmittel (203) eine Schweißschicht umfassen, die an Wänden (208) ausgebildet ist, die von der oberseitigen Oberfläche (204b) des ersten Elements (204) der Formkappe (202) und von der unterseitigen Oberfläche (205a) des zweiten Elements (205) der Formkappe (202) vorstehen.

7. Deckel (1) nach Anspruch 2), **dadurch gekennzeichnet, dass** die Profile (5) aus einer Vielzahl an Kappen (7) bestehen, die an der unterseitigen Wand (3a) der Formkappe (3) angeordnet sind.

8. Deckel (100) nach Anspruch 2), **dadurch gekennzeichnet, dass** die Profile (105) aus einer Vielzahl an Kappen (107) bestehen, die außen mit der oberseitigen Wand (1 02a) der Formkappe (102) gekoppelt sind.

9. Deckel (200) nach Anspruch 1), **dadurch gekennzeichnet, dass** die Profile (206) aus einer Vielzahl an Kappen (207) bestehen, die an der unterseitigen Oberfläche (204a) des ersten Elements (204) der Formkappe (202) angeordnet sind.

10. Deckel (1) nach Anspruch 7), **dadurch gekennzeichnet, dass** die Gegenprofile (6) aus den ersten Durchgangslöchern (2b) bestehen, in welche die Kappen (7) eingeführt sind.

11. Deckel (100) nach Anspruch 8), **dadurch gekennzeichnet, dass** die Gegenprofile (106) aus den ersten Durchgangslöchern (101b) und aus einer Vielzahl an zweiten Durchgangslöchern (102b) bestehen, die in der Formkappe (102) vorhanden sind und die eine Längsachse definieren, die im Wesentlichen deckungsgleich mit der von den ersten Durchgangslöchern (101 b), die im Hauptkörper (101) vorhanden sind, definierten Längsachse ist, wobei die Kappen (107) in den ersten (101b) und den zweiten (102b) Durchgangslöchern eingeführt sind.

12. Deckel (100; 200) nach Anspruch 3) oder 4), **dadurch gekennzeichnet, dass** die Schweißschicht aus einem Heißsiegel besteht.

13. Deckel (1; 100; 200) nach Anspruch 1), **dadurch gekennzeichnet, dass** die Formkappe (3; 102; 202) einen im Wesentlichen T-förmigen Grundriss (3') aufweist.

14. Deckel (1; 100; 200) nach Anspruch 1), **dadurch gekennzeichnet, dass** die Formkappe (3; 102; 202) mit einer Randkante (3b) versehen ist, die außen mit dem Umfang einer erhabenen Kante (8), die zur oberseitigen Wand (2a; 101 a) des Hauptkörpers (2; 101; 201) erhaben ist, gekoppelt ist.

15. Deckel (1; 100; 200) nach Anspruch 14), **dadurch gekennzeichnet, dass** die erhabene Kante (8), einen im Wesentlichen T-förmigen Grundriss (8') aufweist.

16. Deckel (1; 100; 200) nach Anspruch 14), **dadurch gekennzeichnet, dass** die ersten Durchgangslöcher (2b; 101b) in der erhabenen Kante (8) vorhanden sind.

17. Deckel (1; 100; 200) nach Anspruch 14), **dadurch gekennzeichnet, dass** er einen Griff (9; 108) umfasst, der über Verbindungsmittel (10) mit dem Hauptkörper (2; 101; 201) verbunden ist.

18. Deckel nach Anspruch 1), **dadurch gekennzeichnet, dass** er einen Griff umfasst, der über Befestigungsmittel mit dem Hauptkörper verbunden ist.

19. Deckel (1; 100; 200) nach Anspruch 17), **dadurch gekennzeichnet, dass** die Verbindungsmittel (10) aus einem von der erhabenen Kante (8) vorstehenden Stift (11, 12), der in ein in jedem der freien Enden (9a, 9b; 108a, 108b) des Griffs (9; 108) vorhandenen Durchgangsloch eingeführt ist, bestehen.

20. Deckel (200) nach Anspruch 6, **dadurch gekennzeichnet, dass** die vorstehenden Wände (208) des ersten Elements (204) und des zweiten Elements (205) ein Labyrinth bilden, entlang dem die Gase, die durch die während der Akkumulatorladung in jeder Elektrolytenzelle stattfindenden elektrochemischen Prozesse erzeugt werden, kanalisiert werden, bevor sie durch eine im zweiten Element (205) vorhandene Auslassöffnung (209) nach außen ausgestoßen werden.

## Revendications

1. Un couvercle (1; 100; 200) pour boîtiers (C) indiqué pour être utilisé dans la fabrication d'accumulateurs, comprenant un corps principal (2; 101; 201) pour la fermeture dudit boîtier (C), muni d'une pluralité de trous passants (2b; 101 b) pour l'adduction de l'électrolyte, à hauteur desquels se trouve un chapeau galbé (3; 102; 202) s'élévant de la paroi supérieure (2a; 101 a) dudit corps principal (2; 101; 201), ledit corps principal (2; 101; 201) et ledit chapeau galbé (3; 102; 202) étant deux pièces séparées reliées par des moyens de jonction (4; 103; 203) **caractérisé en ce que** ledit chapeau galbé (202) se compose d'un premier élément (204), disposé près dudit corps principal (201), et d'un deuxième élément (205), positionné de façon à couvrir ledit premier élément (204).

2. Le couvercle (1; 100) selon la revendication 1) **caractérisé en ce que** les moyens de jonction (4; 103) comprennent des profils (5; 105), reliés audit chapeau galbé (3; 102), et des profils opposés (6; 106), reliés audit corps principal (2; 101) qui se couplent entre eux par pression.

3. Le couvercle (100) selon la revendication 1) **caractérisé en ce que** lesdits moyens de jonction (103) comprennent une couche de soudage, réalisée à hauteur de parois (104) saillant de la paroi supérieure (101a) dudit corps principal (101) et de la paroi inférieure (102a) dudit chapeau galbé (102).

4. Le couvercle selon la revendication 1) **caractérisé en ce que** lesdits moyens de jonction comprennent une couche de soudage réalisée à hauteur du bord inférieur dudit chapeau galbé et du bord supérieur dudit corps principal.

5. Le couvercle selon la revendication 1) **caractérisé en ce que** lesdits moyens de jonction comprennent une couche adhésive réalisée à hauteur du bord inférieur dudit chapeau galbé et du bord supérieur dudit corps principal.

6. Le couvercle (200) selon la revendication 1) **caractérisé en ce que** lesdits moyens de jonction (203) comprennent une couche de soudage, réalisée à hauteur des parois (208) saillant de la surface supérieure (204b) dudit premier élément (204) dudit chapeau galbé (202) et de la surface inférieure (205a) dudit deuxième élément (205) dudit chapeau galbé (202).

7. Le couvercle (1) selon la revendication 2) **caractérisé en ce que** lesdits profils (5) consistent d'une pluralité de bouchons (7), disposés à hauteur de la paroi inférieure (3a) dudit chapeau galbé (3).

8. Le couvercle (100) selon la revendication 2) **caractérisé en ce que** lesdits profils (105) consistent d'une pluralité de bouchons (107) qui sont appliqués à l'extérieur de la paroi supérieure (102a) dudit chapeau galbé (102).

9. Le couvercle (200) selon la revendication 1) **caractérisé en ce que** lesdits profils (206) consistent d'une pluralité de bouchons (207) disposés sur la surface inférieure (204a) dudit premier élément (204) dudit chapeau galbé (202).

10. Le couvercle (1) selon la revendication 7) **caractérisé en ce que** lesdits profils opposés (6) consistent desdits premiers trous passants (2b) à l'intérieur desquels lesdits bouchons (7) sont insérés.

11. Le couvercle (100) selon la revendication 8) **caractérisé en ce que** lesdits profils opposés (106) consistent de premiers trous passants (101 b) et d'une pluralité de deuxièmes trous passants (102b), obtenus sur ledit chapeau galbé (102), qui définisent un axe longitudinal qui coïncide essentiellement avec l'axe longitudinal défini par lesdits premiers trous passants (101 b) obtenus dans ledit corps principal (101), lesdits bouchons (107) étant insérés dans lesdits premiers (101b) et lesdits deuxièmes (102b) trous passants.

12. Le couvercle (100; 200) selon la revendication 3) ou 4) **caractérisé en ce que** ladite couche de soudage consiste d'un thermosoudage.

13. Le couvercle (1; 100; 200) selon la revendication 1) **caractérisé en ce que** ledit chapeau galbé (3; 102; 202) présente en plan un profil (3') essentiellement en T.

14. Le couvercle (1; 100; 200) selon la revendication 1) **caractérisé en ce que** ledit chapeau galbé (3; 102; 202) est doté d'un bord périphérique (3b) qui se couple à l'extérieur avec le périmètre d'un bord relevé (8) qui se lève de ladite paroi supérieure (2a; 101 a) dudit corps principal (2; 101; 201).

15. Le couvercle (1; 100; 200) selon la revendication 14) **caractérisé en ce que** ledit bord relevé (8) présente en plan un profil (8') essentiellement en T.

16. Le couvercle (1; 100; 200) selon la revendication 14) **caractérisé en ce que** lesdits premiers trous passants (2b; 101b) sont obtenus sur ledit bord relevé (8).

17. Le couvercle (1; 100; 200) selon la revendication 14) **caractérisé en ce qu'**il comprend une poignée (9; 108) couplée avec ledit corps principal (2; 101; 201) par des moyens de jonction (10).

18. Le couvercle selon la revendication 1) **caractérisé en ce qu'**il comprend une poignée couplée avec ledit corps principal par des moyens de fixation.

19. Le couvercle (1; 100; 200) selon la revendication 17) **caractérisé en ce que** lesdits moyens de jonction (10) consistent d'un pivot (11, 12) saillant dudit bord relevé (8), inséré dans un trou passant obtenu sur chacune des extrémités libres (9a, 9b; 108a, 108b) de ladite poignée (9; 108).

20. Le couvercle (200) selon la revendication 6) **caractérisé en ce que** lesdites parois saillantes (208) dudit premier élément (204) dudit deuxième élément (205) forment un labyrinthe le long duquel les gaz produits par le processus électro-chimique qui se vérifie dans chaque cellule électrolytique durant la charge de l'accumulateur sont convoyés, avant d'être évacués vers l'extérieur au moyen d'une bouche de sortie (209) obtenue sur ledit deuxième élément (205).
